# EUROPEAN PATENT APPLICATION

(11) **EP 4 582 270 A1**
(43) Date of publication of application: **09.07.2025**
(21) Application number: 23859247.1
(22) Date of filing: 24.08.2023
(51) Int. Cl.: B60H 1/00

(54) **COOPERATIVE CONTROL METHOD AND APPARATUS FOR ACTIVE GRILLE SHUTTERS AND COOLING FAN**

(30) Priority: 29.08.2022 CN 202211038298
(71) Applicant: Guangzhou Automobile Group Co. Ltd., Guangzhou, Guangdong 510030 (CN)
(72) Inventor: ZHENG, Chunyun, Guangzhou, Guangdong 511434 (CN); CHEN, Xinglong, Guangzhou, Guangdong 511434 (CN)
(74) Representative: Zaboliene, Reda
(86) International application number: PCT/CN2023/114790
(87) International publication number: WO 2024/046214

(57) **Abstract**

The present invention provides a method and an apparatus for cooperatively controlling active grille shutters and a cooling fan. The method comprises while a vehicle air conditioning system turns on, acquiring a speed of a vehicle and a pressure of the vehicle air conditioning system in real time, and determining a predefined speed interval in which the current speed is located; according to the predefined speed interval in which the current vehicle speed is located and a change of the pressure of the air conditioner system, cooperatively controlling the degree of opening of the active grille shutters and the degree of opening of the cooling fan. The present invention divides different vehicle speed intervals, and according to influence weights of the active grille shutter opening and the duty ratio of the cooling fan in the speed interval, the active grille shutter opening and the colling fan duty ratio are cooperatively controlled, and the active grille shutter opening and the duty ratio of the cooling fan are dynamically adjusted, thereby the energy consumption of the air conditioner is decreased maximumly.

## Description

This application claims priority to a Chinese patent application filed with the China Patent Office on August 29, 2022, with application number 202211038298.6 and invention name "Cooperative control method and apparatus for active grille shutters and a cooling fan", the entire contents of which are incorporated by reference in this application.

### TECHNICAL FIELD

The present disclosure relates to intelligent and connected vehicle technologies field, in particular to a method and an apparatus for cooperatively controlling active grille shutters and a cooling fan.

### BACKGROUND

An active grille shutter opening in related art usually directly confirmed based on a turn-on state of an air conditioner, a duty ratio of a cooling fan is simply controlled according to a pressure of the air conditioner, this mechanism often causes a windage resistance of a vehicle to be larger due to the active grille shutter opening being set unreasonably under a condition of a higher speed of the vehicle, under a condition of a lower speed of the vehicle, due to the active grille shutter opening and the duty ratio of the cooling fan do not cooperatively controlled, which cause an energy consumption of the air conditioner to be larger.

### SUMMARY OF THE INVENTION

The technical problems underlaying the present application is to provide a method and an apparatus for cooperatively controlling an active grille shutters and cooling fan, for decreasing an energy consumption of a vehicle.

For solving the above problems, the present application provides a method for cooperatively controlling active grille shutters and a cooling fan, includes:

Capturing a speed of a vehicle and a pressure of an air conditioner of the vehicle in real time, while an air conditioner system turns on, and determining a predefined speed section in which the current speed of the vehicle is located;

Cooperatively controlling an active grille shutter opening and a cooling fan opening according to the predefined speed region of the current speed of the vehicle and a change of the pressure of the air conditioner system.

Further, the predefined speed intervals comprise a high speed interval, a low speed interval, and an idle speed interval; the cooperatively controlling the active grille shutter opening and the cooling fan opening according to the predefined speed interval in which the current speed of the vehicle is located and the change of the pressure of the air conditioner system specifically comprising: while the current speed is located in the high speed interval, executing a policy for adjusting a duty ratio of the cooling fan in priority, as the pressure of the air conditioner increases; executing a policy for adjusting the active grille shutter opening in priority, as the pressure of the air conditioner decreases; while the current speed is located in the low speed interval, executing a policy for adjusting the active grille shutter opening, as the pressure of the air conditioner increases; executing a policy for adjusting the duty ratio of the cooling fan in priority, as the pressure of the air conditioner decreases; while the current speed is located in the idle speed interval, controlling the active grille shutter opening to open to its maximum, and dynamically adjusting the duty ratio of the cooling fan according to the change in the pressure of the air conditioner system.

Further, while the current speed is located in the high speed interval, the executing the policy for adjusting the duty ratio of the cooling fan in priority, as the pressure of the air conditioner increases, specifically comprises: preceding the adjustment of the duty ratio of the cooling fan before the adjustment of the active grille shutter opening, after the air conditioner system turns on, controlling the active grille shutter opening at a minimum opening, and remaining the cooling fan being turned off; after the duty ratio of the cooling fan being increased for each increase, remaining the current active grille shutter opening being unchangeable, until the pressure of the air conditioner system increases to a higher value, then increasing the active grille shutter opening; executing the policy for adjusting the active grille shutter opening in priority, as the pressure of the air conditioner decreases, specifically comprises: preceding the adjustment of the active grille shutter opening before the adjustment of the duty ratio of the cooling fan, after the active grille shutter opening being decreased for each decrease, remaining the current duty ratio of the cooling fan to be unchanged, until the pressure of the air conditioner system decreases to a lower value, then decreasing the duty ratio of the cooling fan.

Further, while the current speed is located in the low speed interval, the executing the policy for adjusting the active grille shutter opening in priority, as the pressure of the air conditioner increases, specifically comprises: preceding the adjustment of the active grille shutter opening before the adjustment of the duty ratio of the cooling fan, after the active grille shutter opening being increased for each increase, remaining the current duty ratio of the cooling fan to be unchanged, until the pressure of the air conditioner system increases to a first predefined value, then increasing the duty ratio of the cooling fan linearly; while the pressure of the air conditioner increases to a second predefined value, increasing the active grill shutter opening to 100%; the second predefined value is larger than the first predefined value; executing the policy for adjusting the duty ratio of the cooling fan in priority, as the pressure of the air conditioner decreases, specifically comprises: preceding the adjustment of the duty ratio of the cooling fan before the adjustment of the active grille shutter opening, after controlling the duty ratio of the cooling fan to decrease in a gradient until a minimum, and then decreasing the active grille shutters opening to 50%; while the pressure of the air conditioner continues decreasing to a third predefined value, controlling the decreasing the active grille shutter opening at the minimum opening again.

Further, while the current speed is located in the idle speed interval, the dynamically adjusting the duty ratio of the cooling fan according to the change in the pressure of the air conditioner system, specifically comprises: controlling the duty ratio of the cooling fan to increase linearly with the pressure of the air conditioner, while the pressure of the air conditioner increases; in a period of the pressure of the air conditioner decreasing, when the pressure decreases to be lower than a hysteretic point, controlling the duty ratio of the cooling fan to decrease with the pressure of the air conditioner, otherwise remaining the duty ratio of the cooling fan being unchangeable.

The present application also provides an apparatus for cooperatively controlling active grille shutters and a cooling fan, includes:

A data acquisition module, configured to capture a speed of a vehicle and a pressure of an air conditioner in real time, while an air conditioner system turns on, and determine a predefined speed interval in which the current speed of the vehicle is located;

A cooperative control module, configured to cooperatively control an active grille shutter opening and a cooling fan opening according to the predefined speed interval in which the current speed of the vehicle is located and a change of the pressure of the air conditioner system.

Further, the predefined speed intervals comprise a high speed interval, a low speed interval, and an idle speed interval; the cooperative control module specifically configured to: while the current speed is located in the high speed interval, execute a policy for adjusting a duty ratio of the cooling fan in priority, as the pressure of the air conditioner increases; execute a policy for adjusting the active grille shutter opening in priority, as the pressure of the air conditioner decreases; while the current speed is located in the low speed interval, execute a policy for adjusting the active grille shutter opening, as the pressure of the air conditioner increases; execute a policy for adjusting the duty ratio of the cooling fan in priority, as the pressure of the air conditioner decreases; while the current speed is located in the idle speed interval, control the active grille shutter opening to open to its maximum, and dynamically adjust the duty ratio of the cooling fan according to the change in the pressure of the air conditioner system.

Further, while the current speed is located in the high speed interval, the process of executing the policy for adjusting the duty ratio of the cooling fan in priority, as the pressure of the air conditioner increases, specifically comprises: preceding the adjustment of the duty ratio of the cooling fan before the adjustment of the active grille shutter opening, after the air conditioner system turns on, controlling the active grille shutter opening at a minimum opening, and remaining the cooling fan being turned off; after the duty ratio of the cooling fan is increased for each increase, remaining the current active grille shutter opening being unchangeable, until the pressure of the air conditioner system increases to a higher value, then increasing the active grille shutter opening; the process of executing the policy for adjusting the active grille shutter opening in priority, as the pressure of the air conditioner decreases, specifically comprises: preceding the adjustment of the active grille shutter opening before the adjustment of the duty ratio of the cooling fan, after the active grille shutter opening is decreased for each decrease, remaining the current duty ratio of the cooling fan being unchangeable, until the pressure of the air conditioner system increases to a lower value, then decreasing the duty ratio of the cooling fan.

Further, while the current speed is located in the low speed interval, the process of executing the policy for adjusting the active grille shutter opening in priority, as the pressure of the air conditioner increases, specifically comprises: preceding the adjustment of the active grille shutter opening before the adjustment of the duty ratio of the cooling fan, after the active grille shutter opening being increased for each increase, remaining the current duty ratio of the cooling fan being unchangeable, until the pressure of the air conditioner system increases to a first predefined value, then increasing the duty ratio of the cooling fan linearly; while the pressure of the air conditioner increases to a second predefined value, increasing the active grill shutter opening to 100%; the second predefined value is larger than the first predefined value; the process of executing the policy for adjusting the duty ratio of the cooling fan in priority, as the pressure of the air conditioner decreases, specifically comprises: preceding the adjustment of the duty ratio of the cooling fan before the adjustment of the active grille shutter opening, after controlling the duty ratio of the cooling fan to decrease in a gradient until a minimum, and then decreasing the active grille shutters opening to 50%; while the pressure of the air conditioner continues decreasing to a third predefined value, controlling the decreasing the active grille shutter opening at the minimum opening again.

Further, while the current speed is located in the idle speed interval, the process of dynamically adjusting the duty ratio of the cooling fan according to the change in the pressure of the air conditioner system, specifically comprises: controlling the duty ratio of the cooling fan to increase linearly with the pressure of the air conditioner, while the pressure of the air conditioner increases; in a period of the pressure of the air conditioner decreasing, when the pressure decreases to be lower than a hysteretic point, controlling the duty ratio of the cooling fan to decrease with the pressure of the air conditioner, otherwise the duty ratio of the cooling fan remains unchangeable.

The present application has beneficial effects at least as follows:

The present application divides different speed regions, cooperatively controls the active grille shutter opening and the cooling fan opening according to the active grille shutter opening and the cooling fan opening in the speed section, dynamically adjusts the active grille shutter opening and the duty ratio of the cooling fan, thus the energy consumption of the air conditioner is decreased maximumly.

### BRIEF DESCRIPTION OF THE DRAWINGS

In order to more clearly illustrate the technical solutions in the embodiments of the present application or the prior art, the following will briefly introduce the drawings that need to be used in the description of the embodiments or the prior art. Obviously, the drawings in the following description are only some embodiments of the present application, and those skilled in the art can also obtain other drawings according to these drawings without creative work.
FIG. 1 is a flowchart of a method for cooperatively controlling an active grille shutters and cooling fan of a first embodiment of the present application.
FIG. 2 is a schematic diagram of divided speed intervals of an embodiment of the present application.
FIG. 3A is a diagram of an embodiment of the present application of a relationship of the duty ratio of the cooling fan and the pressure of the air conditioner system while a speed of a vehicle is located in a high speed interval.
FIG. 3B is a diagram of an embodiment of the present application of a relationship of the active grille shutter opening and the pressure of the air conditioner system while the speed of the vehicle is located in the high speed interval.
FIG. 4A is a diagram of an embodiment of the present application of a relationship of the duty ratio of the cooling fan and the pressure of the air conditioner system while the speed of the vehicle is located in a low speed interval.
FIG. 4B is a diagram of an embodiment of the present application of a relationship of the active grille shutter opening and the pressure of the air conditioner system while the speed of the vehicle is located in the low speed interval.

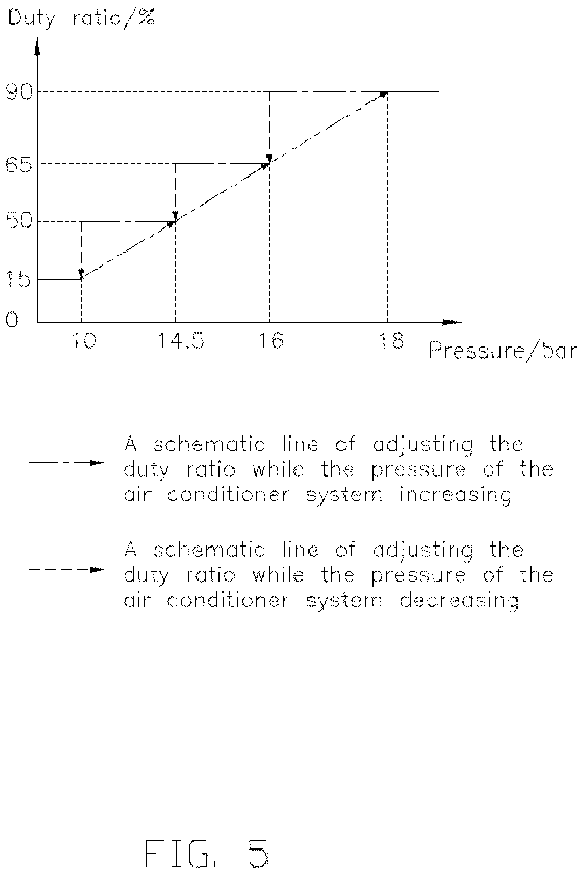

FIG. 5 is a diagram of an embodiment of the present application of a relationship of the duty ratio of the cooling fan and the pressure of the air conditioner system while the speed of the vehicle is located in an idle speed interval.

### DETAILED DESCRIPTION

The following description of various embodiments is made with reference to the accompanying drawings to illustrate specific embodiments that the disclosure may be practiced.

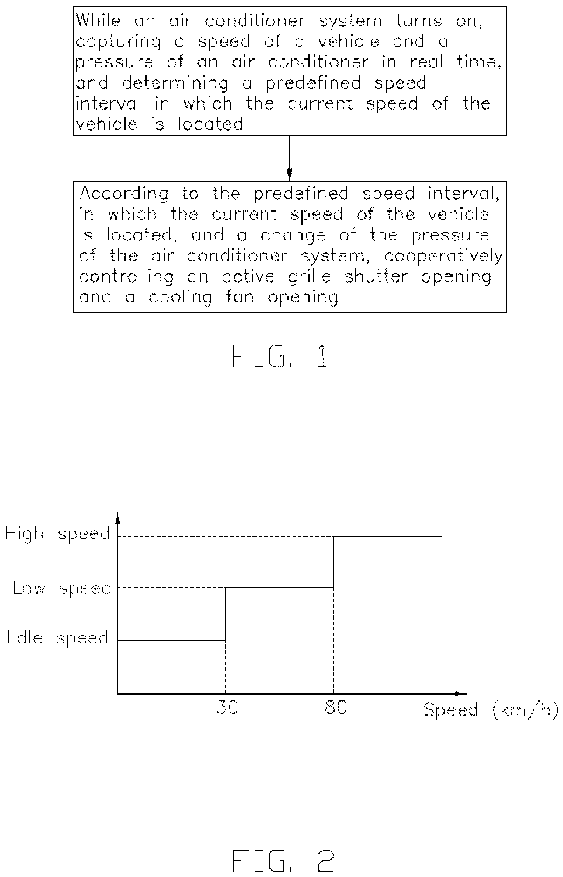

Please referring to FIG. 1 shown, a first embodiment of the present application provides a method for cooperatively controlling active grille shutters and a cooling fan, includes:
Capturing a speed of a vehicle and a pressure of an air conditioner in real time, while an air conditioner system turns on, and determining a predefined speed interval in which the current speed of the vehicle is located;
Cooperatively controlling an active grille shutter opening and a cooling fan opening according to the predefined speed interval, in which the current speed of the vehicle is located, and a change of the pressure of the air conditioner system.

Specifically, as shown in FIG. 2, in one embodiment, there are three speed intervals being pre-divided: a high speed interval, a low speed interval, and an idle speed interval. As an example, the high speed interval is the speed of the vehicle being greater than or equal to 80km/h, the low speed interval is the speed of the vehicle being greater than 30km/h and being less than 80km/h, the idle speed interval is the speed of the vehicle being less than or equal to 30km/h. while the air conditioner system of the vehicle turns on, the speed of the vehicle is captured in real time, and then the speed interval being pre-divided in which the current speed of the vehicle is located is determined. Meanwhile, the pressure of the air conditioner system of the vehicle is also captured in real time, the active grille shutter opening and the cooling fan opening of the present embodiment are cooperatively controlled according to the change of the pressure of the air conditioner system, under different speed intervals.

The cooperativity is a process or a capacity of cooperating in harmony to finish an aim, by harmonizing two or more than two different resources or individuals; thus, it is understood that, the cooperatively controlling of the embodiment indicates that under different speed intervals, controlling the active grille shutter opening, and also controlling the duty ratio of the cooling fan, according to the different pressure of the air conditioner system; or controlling the duty ratio of the cooling fan, and also controlling the active grille shutter opening, according to the different pressure of the air conditioner system; therefore a goal of decreasing an energy consumption of the air conditioner system is collaboratively reached.

Based on above description, cooperatively controlling the active grille shutter opening and the cooling fan opening includes:
While the current speed is located in the high speed interval, a policy for adjusting a duty ratio of the cooling fan is executed in priority, as the pressure of the air conditioner increases; a policy for adjusting the active grille shutter opening is executed in priority, as the pressure of the air conditioner decreases;
While the current speed is located in the low speed interval, a policy for adjusting the active grille shutter opening is executed, as the pressure of the air conditioner increases; a policy for adjusting the duty ratio of the cooling fan is executed in priority, as the pressure of the air conditioner decreases;
While the current speed is located in the idle speed interval, the active grille shutter opening is controlled to be opened to its maximum, and the duty ratio of the cooling fan is dynamically adjusted according to the change in the pressure of the air conditioner system.

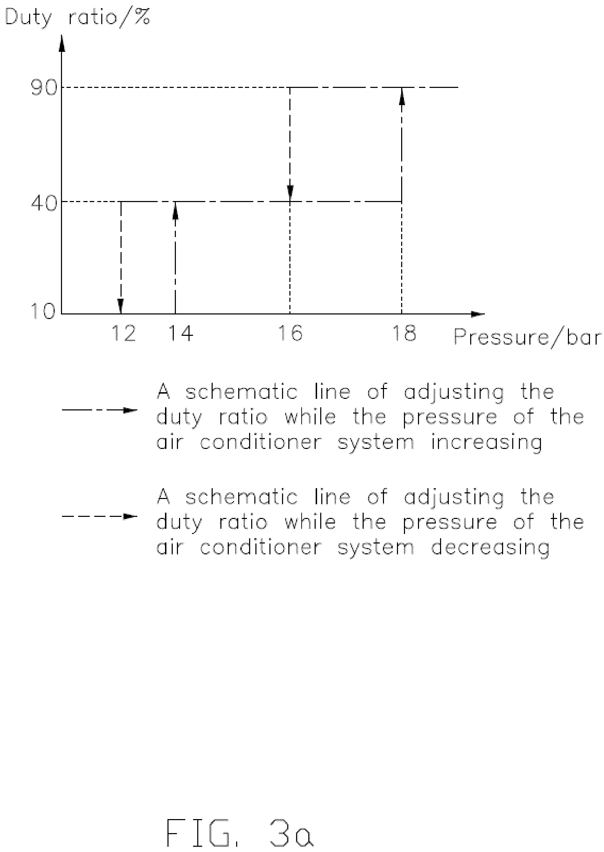

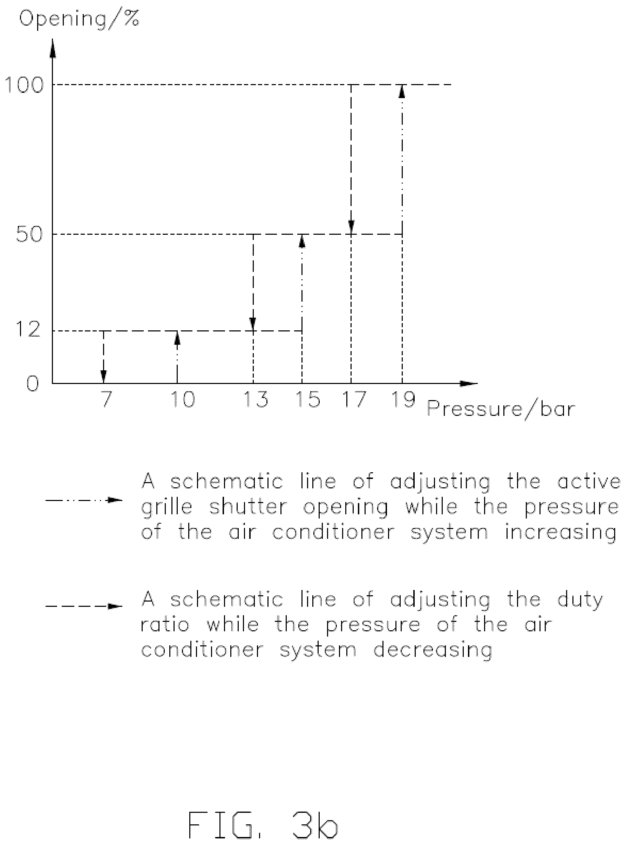

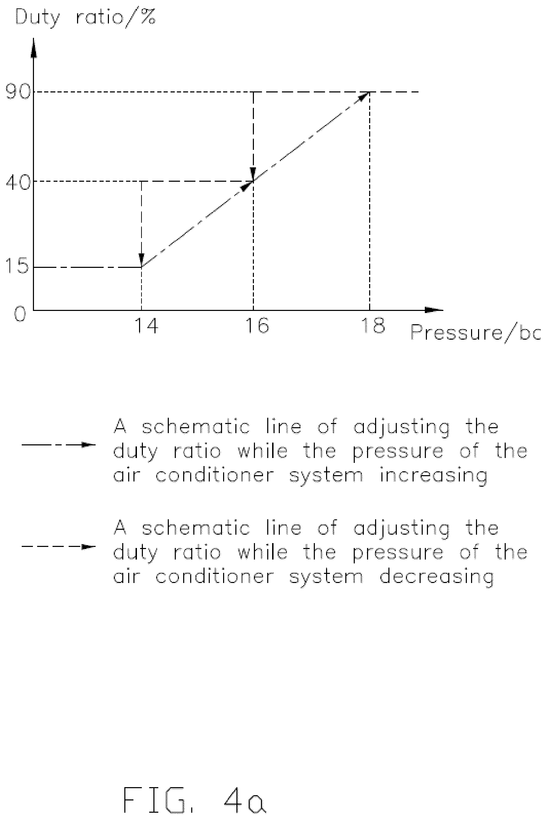

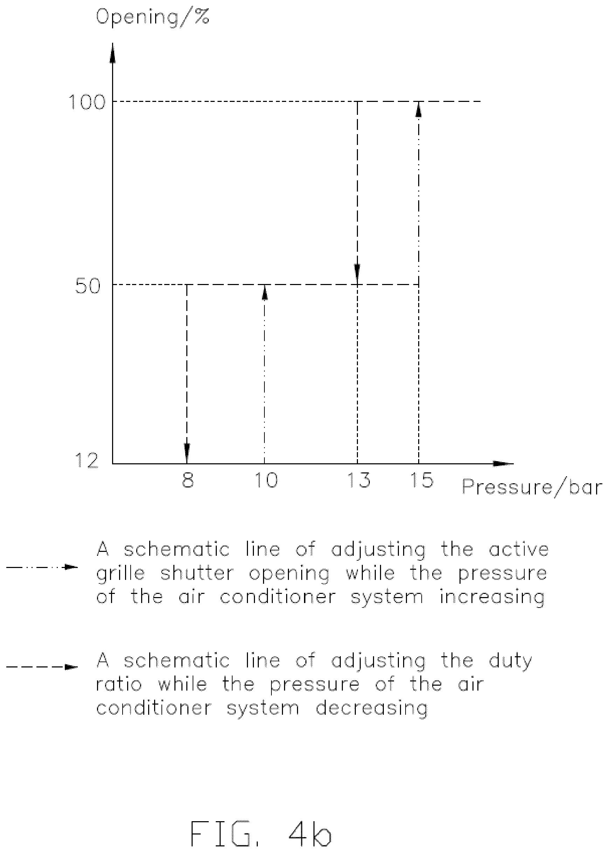

The above policies are described specifically as below with the FIGS. 3A, 3B, 4A, 4B.

### (One) the current speed is located in the high speed interval

When the current speed is located in the high speed interval, because the active grille shutter opening has a great influence on a windage resistance, the active grille shutter opening should be decreased as much as possible: the duty ratio of the cooling fan is adjusted in priority while the pressure increases, the active grille shutter opening is adjusted in priority while the pressure decreases, for reducing the energy consumption as much as possible. Under different pressures of the air conditioner system, the active grille shutter opening and the duty ratio of the cooling fan are cooperatively controlled as follows:
(1) when the air conditioner system turns on, the active grille shutter opening is controlled at a minimum opening 12%, the cooling fan remains being turned off, for ensuring a certain supply air rate in a condenser;
   As the pressure of the air conditioner system rises, the duty ratio of the cooling fan is adjusted firstly, after the pressure rises to 14bar, the duty ratio of the cooling fan rises to 40%, the active grille shutter opening remains at the minimum opening 12%;
   When the pressure rises to 15bar, the active grille shutter opening is adjusted at 50%;
   If the pressure continues to rise, when the pressure rises to 18bar, the duty ratio of the cooling fan rises to 90%, the active grille shutter opening remains at the minimum opening 50%; when the pressure rises to 19bar, the active grille shutter opening is adjusted at 100%;
   As the recited above, as the pressure of the air conditioner system increases, the active grille shutter opening is adjusted for several times, and the duty ratio of the cooling fan is also adjusted for several times, the policy of adjusting the duty ratio of the cooling fan firstly is preceded the adjustment of the duty ratio of the cooling fan before the adjustment of the active grille shutter opening, after the air conditioner system turns on, the active grille shutter opening is controlled at the minimum opening, and the cooling fan remains being turned off; after the duty ratio of the cooling fan is increased for each increase, the current active grille shutter opening remains being unchangeable, until the pressure of the air conditioner system increases to a higher value, then increasing the active grille shutter opening.
(2) as the pressure decreases, the active grille shutter opening is adjusted firstly, after the pressure reduces to 17bar, the active grille shutter opening decreases to 50%, the duty ratio of the cooling fan remains at 90%;
   When the pressure rises to 16bar, the duty ratio of the cooling fan is adjusted at 40%; if the pressure continues to reduce, when the pressure reduces to 13bar, the active grille shutter opening decreases to 12%, the duty ratio of the cooling fan remains at 40%; when the pressure reduces to 12bar, the duty ratio of the cooling fan is adjusted at 10%;
   As the recited above, as the pressure of the air conditioner system decreases, the active grille shutter opening is adjusted for several times, and the duty ratio of the cooling fan is also adjusted for several times, the policy of adjusting the active grille shutter opening firstly is preceded the adjustment of the active grille shutter opening before the adjustment of the duty ratio of the cooling fan, after the active grille shutter opening is decreased for each decrease, the current duty ratio of the cooling fan remains being unchanged, until the pressure of the air conditioner system decreases to a lower value, then the duty ratio of the cooling fan is decreased.

### (Second) the current speed is located in the low speed interval

When the current speed is located in the low speed interval, because the active grille shutter opening has a less influence on the windage resistance, the active grille shutter opening should be increased as much as possible: the active grille shutter opening is adjusted in priority while the pressure increases, the duty ratio of the cooling fan is adjusted in priority while the pressure decreases. Under different pressures of the air conditioner system, the active grille shutter opening and the duty ratio of the cooling fan are controlled as follows:
(1) when the air conditioner system turns on, the active grille shutter opening is controlled at the minimum opening 12%, the duty ratio of the cooling fan is controlled at a minimum duty ratio 15%, for ensuring a certain supply air rate in a condenser;
   As the pressure of the air conditioner system rises, the active grille shutter opening is adjusted firstly, after the pressure rises to 10bar, the active grille shutter opening rises to 50%, the duty ratio of the cooling fan remains at the minimum duty ratio 15%;
   If the pressure continues to rise, when the pressure rises to 14bar, the active grille shutter opening rises linearly as the pressure increasing; when the pressure rises to 15bar, the active grille shutter opening is at 100%, for ensuring the optimum supply air rate;
   As the recited above, as the pressure of the air conditioner system increases, the active grille shutter opening is adjusted for several times, and the duty ratio of the cooling fan is also adjusted for several times, the policy of adjusting the active grille shutter opening firstly is preceded the adjustment of the active grille shutter opening before the adjustment of the duty ratio of the cooling fan, after the active grille shutter opening is firstly rose, the duty ratio of the cooling fan remains being unchangeable, until the pressure of the air conditioner system rises to a first predefined value (such as 14bar), then the duty ratio of the cooling fan is rose as the pressure of the air conditioner system; when the pressure of the air conditioner system rises at a second predefined value (such as 15bar), the active grille shutter opening is rose at 100%, the second predefined value is larger than the first predefined value.
(2) as the pressure decreases, the duty ratio of the cooling fan is controlled to be decreased in a gradient, for effectively preventing duty ratio being vibrated while the pressure fluctuates; when the pressure decreases at 13bar, after the duty ratio of the cooling fan decreases to a minimum 15%, the active grille shutter opening is controlled to be decreased at 50%; when the pressure decreases at 8bar, the active grille shutter opening is decreased at the minimum opening 12% again;

As the recited above, as the pressure of the air conditioner system decreases, the active grille shutter opening is adjusted for several times, and the duty ratio of the cooling fan is also adjusted for several times, the policy of adjusting the duty ratio of the cooling fan firstly is preceded the adjustment of the duty ratio of the cooling fan before the adjustment of the active grille shutter opening, after the duty ratio of the cooling fan to decrease in a gradient until a minimum, and then the active grille shutters opening is decreased to 50%; while the pressure of the air conditioner continues decreases to a third predefined value (such as 8bar), the active grille shutter opening decreases at the minimum opening again.

### (Third) the current speed of the vehicle is located in the idle interval

When the current speed of the vehicle is located in the idle interval, because of the vehicle is equivalent to in a stationary state, the windage resistance may be omitted, the active grille shutter opening is at 100%. Under different pressures of the air conditioner system, the duty ratio of the cooling fan is controlled as follows:

As the pressure rises, the duty ratio of the cooling fan is controlled to increase linearly with the pressure of the air conditioner; in a period of decreasing the pressure of the air conditioner, when the pressure decreases to be lower than a hysteretic point, the duty ratio of the cooling fan is controlled to decrease with the pressure of the air conditioner, otherwise the duty ratio of the cooling fan remains unchangeable.

It should be noted that, the specific values of the above change of the pressure, the active grille shutter opening, and the duty ratio of the cooling fan may be adjusted according to different types of the vehicle and different configurations, and by doing calibration test of the real vehicle, the active grille shutter openings and the duty ratios of the cooling fan corresponding to different speeds are obtained, and are used in actual cooperation control, for achieving advantages in control being more accurately and an effect in energy-saving and cost-reducing being more obvious.

Corresponding test data are obtained as follow, by applying the present application on one type of the vehicle, being compared with a related technical solution:

| Environment temperature | The present application (cooperatively controlling the active grille opening and the duty ratio of the cooling fan) | Related technical solution (controlling the active grille opening and the duty ratio of the cooling fan independently) | Total energy consumption comparison |
|---|---|---|---|
| 35°C | The duty ratio of the cooling fan: 40% | The duty ratio of the cooling fan: 40% | Reducing 34w |
| | The active grille shutter opening: 50% | Energy consumption of the compressor: 484w | |
| | Energy consumption of a compressor: 550w | | |
| | Energy consumption reduced caused by decreasing the windage resistance: 100w | | |
| 15°C | The duty ratio of the cooling fan: 10% (not-rotation) | The duty ratio of the cooling fan: 10% (not-rotation) | Reducing 165w |
| | The active grille shutter opening:12% | | |
| | Energy consumption of the compressor: 189w | Energy consumption of the compressor: 174w | |
| | Energy consumption reduced caused by decreasing the windage resistance: 180w | | |

Therefore, the present application may obtain the effect in energy-saving and cost-reducing, specially under working conditions in the spring and the autumn, the present application may decrease the energy consumption of 165w, the effect in energy-saving is better.

Corresponding to the embodiment of the method for cooperatively controlling the active grille shutter opening and the cooling fan, a second embodiment of the present application provides an apparatus for cooperatively controlling the active grille shutter opening and the cooling fan, includes:
A data acquisition module, configured to capture a speed of a vehicle and a pressure of an air conditioner in real time, while an air conditioner system turns on, and determine a predefined speed interval in which the current speed of the vehicle is located;
A cooperative control module, configured to cooperatively control an active grille shutter opening and a cooling fan opening according to the predefined speed interval in which the current speed of the vehicle is located and a change of the pressure of the air conditioner system.

Further, the predefined speed intervals comprise a high speed interval, a low speed interval, and an idle speed interval, the cooperative control module specifically configured to:
While the current speed is located in the high speed interval, as the pressure of the air conditioner increases, execute a policy for adjusting a duty ratio of the cooling fan in priority; as the pressure of the air conditioner decreases, execute a policy for adjusting the active grille shutter opening in priority;
While the current speed is located in the low speed interval, as the pressure of the air conditioner increases, execute a policy for adjusting the active grille shutter opening; as the pressure of the air conditioner decreases, execute a policy for adjusting the duty ratio of the cooling fan in priority;
While current speed is located in the idle speed interval, control the active grille shutter opening to open to its maximum, and dynamically adjust the duty ratio of the cooling fan according to the change in the pressure of the air conditioner system.

Further, while the current speed is located in the high speed interval, as the pressure of the air conditioner increases, the process of executing the policy for adjusting the duty ratio of the cooling fan in priority, specifically includes: preceding the adjustment of the duty ratio of the cooling fan before the adjustment of the active grille shutter opening, after the air conditioner system turns on, controlling the active grille shutter opening at a minimum opening, and remaining the cooling fan being turned off; after the duty ratio of the cooling fan is increased for each increase, remaining the current active grille shutter opening being unchangeable, until the pressure of the air conditioner system increases to a higher value, then increasing the active grille shutter opening;
As the pressure of the air conditioner decreases, the process of executing the policy for adjusting the active grille shutter opening in priority, specifically includes: preceding the adjustment of the active grille shutter opening before the adjustment of the duty ratio of the cooling fan, after the active grille shutter opening is decreased for each decrease, remaining the current duty ratio of the cooling fan being unchangeable, until the pressure of the air conditioner system increases to a lower value, then decreasing the duty ratio of the cooling fan.

Further, while the current speed is located in the low speed interval, as the pressure of the air conditioner increases, the process of executing the policy for adjusting the active grille shutter opening in priority, specifically includes: preceding the adjustment of the active grille shutter opening before the adjustment of the duty ratio of the cooling fan, after the active grille shutter opening being increased for each increase, remaining the current duty ratio of the cooling fan being unchangeable, until the pressure of the air conditioner system increases to a first predefined value, then increasing the duty ratio of the cooling fan linearly; while the pressure of the air conditioner increases to a second predefined value, increasing the active grill shutter opening to 100%; the second predefined value is larger than the first predefined value;
As the pressure of the air conditioner decreases, the process of executing the policy for adjusting the duty ratio of the cooling fan in priority, specifically includes: preceding the adjustment of the duty ratio of the cooling fan before the adjustment of the active grille shutter opening, after controlling the duty ratio of the cooling fan to decrease in a gradient until a minimum, and then decreasing the active grille shutters opening to 50%; while the pressure of the air conditioner continues decreasing to a third predefined value, controlling the decreasing the active grille shutter opening at the minimum opening again.

Further, while the current speed is located in the idle speed interval, the process of dynamically adjusting the duty ratio of the cooling fan according to the change in the pressure of the air conditioner system, specifically comprises: controlling the duty ratio of the cooling fan to increase linearly with the pressure of the air conditioner, while the pressure of the air conditioner increases; in a period of the pressure of the air conditioner decreasing, when the pressure decreases to be lower than a hysteretic point, controlling the duty ratio of the cooling fan to decrease with the pressure of the air conditioner, otherwise the duty ratio of the cooling fan remains unchangeable.

The working principle and the process of the embodiment refers to the description of the first embodiment of the present application, no further details shall therefore be given here.

Based the above description, in comparison with the related technical solution, the present application has beneficial effects at least as follows: the present application divides different speed regions, cooperatively controls the active grille shutter opening and the cooling fan opening according to the active grille shutter opening and the cooling fan opening in the speed section, dynamically adjusts the active grille shutter opening and the duty ratio of the cooling fan, thus the energy consumption of the air conditioner is decreased maximumly.

The disclosures above are merely exemplary embodiments of the present invention, certainly not intended to limit the claim range of the present application. Various variations or replacements according to the claims of the present application still fall within the scope covered by the present invention.

## Claims

1. A method for cooperatively controlling active grille shutters and a cooling fan, charactered in that, comprising:
capturing a speed of a vehicle and a pressure of an air conditioner in real time, while an air conditioner system turns on, and determining a predefined speed interval in which the current speed of the vehicle is located;
cooperatively controlling an active grille shutter opening and a cooling fan opening according to the predefined speed interval, in which the current speed of the vehicle is located, and a change of the pressure of the air conditioner system.

2. The method according to claim 1, wherein the predefined speed intervals comprise a high speed interval, a low speed interval, and an idle speed interval; the cooperatively controlling the active grille shutter opening and the cooling fan opening according to the predefined speed interval in which the current speed of the vehicle is located and the change of the pressure of the air conditioner system specifically comprising: while the current speed is located in the high speed interval, executing a policy for adjusting a duty ratio of the cooling fan in priority, as the pressure of the air conditioner increases; executing a policy for adjusting the active grille shutter opening in priority, as the pressure of the air conditioner decreases; while the current speed is located in the low speed interval, executing a policy for adjusting the active grille shutter opening, as the pressure of the air conditioner increases; executing a policy for adjusting the duty ratio of the cooling fan in priority, as the pressure of the air conditioner decreases; controlling the active grille shutter opening to open to its maximum, and dynamically adjusting the duty ratio of the cooling fan according to the change in the pressure of the air conditioner system, while the current speed is located in the idle speed interval.

3. The method according to claim 2, wherein while the current speed is located in the high speed interval, the executing the policy for adjusting the duty ratio of the cooling fan in priority, as the pressure of the air conditioner increases, specifically comprises: preceding the adjustment of the duty ratio of the cooling fan before the adjustment of the active grille shutter opening, after the air conditioner system turns on, controlling the active grille shutter opening at a minimum opening, and remaining the cooling fan being turned off; after the duty ratio of the cooling fan being increased for each increase, remaining the current active grille shutter opening being unchangeable, until the pressure of the air conditioner system increases to a higher value, then increasing the active grille shutter opening; executing the policy for adjusting the active grille shutter opening in priority, as the pressure of the air conditioner decreases, specifically comprises: preceding the adjustment of the active grille shutter opening before the adjustment of the duty ratio of the cooling fan, after the active grille shutter opening being decreased for each decrease, remaining the current duty ratio of the cooling fan to be unchanged, until the pressure of the air conditioner system decreases to a lower value, then decreasing the duty ratio of the cooling fan.

4. The method according to claim 2, wherein while the current speed is located in the low speed interval, the executing the policy for adjusting the active grille shutter opening in priority, as the pressure of the air conditioner increases, specifically comprises: preceding the adjustment of the active grille shutter opening before the adjustment of the duty ratio of the cooling fan, after the active grille shutter opening being increased for each increase, remaining the current duty ratio of the cooling fan to be unchanged, until the pressure of the air conditioner system increases to a first predefined value, then increasing the duty ratio of the cooling fan linearly; while the pressure of the air conditioner increases to a second predefined value, increasing the active grill shutter opening to 100%; the second predefined value is larger than the first predefined value; executing the policy for adjusting the duty ratio of the cooling fan in priority, as the pressure of the air conditioner decreases, specifically comprises: preceding the adjustment of the duty ratio of the cooling fan before the adjustment of the active grille shutter opening, after controlling the duty ratio of the cooling fan to decrease in a gradient until a minimum, and then decreasing the active grille shutters opening to 50%; while the pressure of the air conditioner continues decreasing to a third predefined value, controlling the decreasing the active grille shutter opening at the minimum opening again.

5. The method according to claim 2, wherein while the current speed is located in the idle speed interval, the dynamically adjusting the duty ratio of the cooling fan according to the change in the pressure of the air conditioner system, specifically comprises: while the pressure of the air conditioner increases, controlling the duty ratio of the cooling fan to increase linearly with the pressure of the air conditioner; in a period of the pressure of the air conditioner decreasing, when the pressure decreases to be lower than a hysteretic point, controlling the duty ratio of the cooling fan to decrease with the pressure of the air conditioner, otherwise remaining the duty ratio of the cooling fan being unchangeable.

6. An apparatus for cooperatively controlling active grille shutters and a cooling fan, charactered in that, comprising:
a data acquisition module, configured to capture a speed of a vehicle and a pressure of an air conditioner in real time, while an air conditioner system turns on, and determine a predefined speed interval in which the current speed of the vehicle is located;
a cooperative control module, configured to cooperatively control an active grille shutter opening and a cooling fan opening according to the predefined speed interval in which the current speed of the vehicle is located and a change of the pressure of the air conditioner system.

7. The apparatus according to claim 6, wherein the predefined speed intervals comprise a high speed interval, a low speed interval, and an idle speed interval; the cooperative control module specifically configured to: while the current speed is located in the high speed interval, execute a policy for adjusting a duty ratio of the cooling fan in priority, as the pressure of the air conditioner increases; execute a policy for adjusting the active grille shutter opening in priority, as the pressure of the air conditioner decreases; while the current speed is located in the low speed interval, execute a policy for adjusting the active grille shutter opening, as the pressure of the air conditioner increases; execute a policy for adjusting the duty ratio of the cooling fan in priority, as the pressure of the air conditioner decreases; while the current speed is located in the idle speed interval, control the active grille shutter opening to open to its maximum, and dynamically adjust the duty ratio of the cooling fan according to the change in the pressure of the air conditioner system,.

8. The apparatus according to claim 7, wherein while the current speed is located in the high speed interval, the process of executing the policy for adjusting the duty ratio of the cooling fan in priority, as the pressure of the air conditioner increases, specifically comprises: preceding the adjustment of the duty ratio of the cooling fan before the adjustment of the active grille shutter opening, after the air conditioner system turns on, controlling the active grille shutter opening at a minimum opening, and remaining the cooling fan being turned off; after the duty ratio of the cooling fan is increased for each increase, remaining the current active grille shutter opening being unchangeable, until the pressure of the air conditioner system increases to a higher value, then increasing the active grille shutter opening; the process of executing the policy for adjusting the active grille shutter opening in priority, as the pressure of the air conditioner decreases, specifically comprises: preceding the adjustment of the active grille shutter opening before the adjustment of the duty ratio of the cooling fan, after the active grille shutter opening is decreased for each decrease, remaining the current duty ratio of the cooling fan being unchangeable, until the pressure of the air conditioner system decreases to a lower value, then decreasing the duty ratio of the cooling fan.

9. The apparatus according to claim 7, wherein while the current speed is located in the low speed interval, the process of executing the policy for adjusting the active grille shutter opening in priority, as the pressure of the air conditioner increases, specifically comprises: preceding the adjustment of the active grille shutter opening before the adjustment of the duty ratio of the cooling fan, after the active grille shutter opening being increased for each increase, remaining the current duty ratio of the cooling fan being unchangeable, until the pressure of the air conditioner system increases to a first predefined value, then increasing the duty ratio of the cooling fan linearly; while the pressure of the air conditioner increases to a second predefined value, increasing the active grill shutter opening to 100%; the second predefined value is larger than the first predefined value; the process of executing the policy for adjusting the duty ratio of the cooling fan in priority, as the pressure of the air conditioner decreases, specifically comprises: preceding the adjustment of the duty ratio of the cooling fan before the adjustment of the active grille shutter opening, after controlling the duty ratio of the cooling fan to decrease in a gradient until a minimum, and then decreasing the active grille shutters opening to 50%; while the pressure of the air conditioner continues decreasing to a third predefined value, controlling the decreasing the active grille shutter opening at the minimum opening again.

10. The apparatus according to claim 7, wherein while the current speed is located in the idle speed interval, the process of dynamically adjusting the duty ratio of the cooling fan according to the change in the pressure of the air conditioner system, specifically comprises: while the pressure of the air conditioner increases, controlling the duty ratio of the cooling fan to increase linearly with the pressure of the air conditioner; in a period of the pressure of the air conditioner decreasing, when the pressure decreases to be lower than a hysteretic point, controlling the duty ratio of the cooling fan to decrease with the pressure of the air conditioner, otherwise the duty ratio of the cooling fan remains unchangeable.
